# EUROPEAN PATENT APPLICATION

(11) **EP 4 435 145 A2**
(43) Date of publication of application: **25.09.2024**
(21) Application number: 23192362.4
(22) Date of filing: 21.08.2023
(51) Int. Cl.: C25B 1/04, C25B 3/26, C25B 9/23, C25B 11/032, C25B 15/08

(54) **ELECTROLYSIS DEVICE**

(30) Priority: 22.03.2023 JP 2023045363
(71) Applicant: KABUSHIKI KAISHA TOSHIBA, Minato-ku Tokyo 105-0023 (JP)
(72) Inventor: Mikoshiba, Satoshi, Tokyo, 105-0023 (JP); Kudo, Yuki, Tokyo, 105-0023 (JP); Ono, Akihiko, Tokyo, 105-0023 (JP); Kitagawa, Ryota, Tokyo, 105-0023 (JP); Kofuji, Yusuke, Tokyo, 105-0023 (JP); Kiyota, Yasuhiro, Tokyo, 105-0023 (JP)
(74) Representative: Hoffmann Eitle

(57) **Abstract**

An electrolysis device of an arrangement includes: an electrolysis cell including a porous cathode in contact with one surface of a diaphragm, an anode in contact with the other surface of the diaphragm, a cathode flow path in contact with the porous cathode, and an anode flow path in contact with the anode; a first supply part supplying the cathode flow path with a gas containing a substance to be reduced; and a second supply part supplying the anode flow path with an electrolysis solution. The cathode flow path has a first area including a gas flow path of a continuous structure that has a first gas inlet connected to the first supply part, and a first gas outlet, and a second area including a gas flow path of an interrupted structure that has a second gas inlet connected to the first gas outlet, and a second gas outlet.

## Description

### FIELD

Arrangements disclosed herein relate to an electrolysis device.

### BACKGROUND

There has been a concern about the depletion of fossil fuels such as petroleum and coal, and expectations are increasing for sustainable renewable energy. In view of such an energy problem as well as an environmental problem, there is being developed a power to chemical technology of reducing carbon dioxide electrochemically by using renewable energy such as sunlight to thereby create a storable chemical energy source. An electrolysis device achieving the power to chemical technology has an anode oxidizing water (H₂O) to produce oxygen (O₂) and a cathode reducing carbon dioxide (CO₂) to produce a carbon compound such as carbon monoxide (CO), for example.

The cathode of the electrolysis device is disposed to be in contact with CO₂ flowing in a gas flow path, for example. The cathode reduces CO₂ by obtaining a reduction potential of CO₂ from a power supply or the like derived from renewable energy to thereby produce a carbon compound such as carbon monoxide (CO), formic acid (HCOOH), methanol (CH₃OH), methane (CH₄), ethanol (C₂H₅OH), ethane (C₂H₆), ethylene (C₂H₄), and ethylene glycol (C₂H₆O₂). When a CO₂ gas is made to flow in the gas flow path to thereby cause a reduction reaction, a CO₂ partial pressure in the gas on a flow path outlet side becomes low, resulting in that the CO₂ reduction reaction tends to be hard to progress. Therefore, on the flow path outlet side, a reduction reaction rate of CO₂ introduced into the gas flow path is likely to deteriorate. Thus, the electrolysis device is desired to suppress deterioration of the reduction reaction of CO₂ being a substance to be reduced based on the gas flow path and to increase the reduction reaction rate of the substance to be reduced such as introduced CO₂.

### SUMMARY

A subject be solved by the aspect of the present invention is to provide an electrolysis device that make it possible to increase a reduction reaction rate of a substance to be reduced introduced in a gas flow path.

According to the aspects of the present invention, there is provided an electrolysis device that make it possible to increase a reduction reaction rate of a substance to be reduced introduced in a gas flow path.

### BRIEF DESCRIPTION OF THE DRAWINGS

FIG. 1 is a cross-sectional view illustrating an electrolysis device of an embodiment.
FIG. 2 is a plan view illustrating a cathode flow path in an electrolysis cell of the electrolysis device illustrated in FIG. 1.
FIG. 3 is a perspective view illustrating the cathode flow path in the electrolysis cell of the electrolysis device illustrated in FIG. 1.
FIG. 4 is a cross-sectional view illustrating a flow of a gas in a second area in the electrolysis cell illustrated in FIG. 3.

### DETAILED DESCRIPTION

An electrolysis device of an arrangement includes: an electrolysis cell including a diaphragm, a porous cathode that has a first surface in contact with one surface of the diaphragm and a second surface on the opposite side of the first surface and reduces a substance to be reduced, an anode that is disposed to be in contact with the other surface of the diaphragm and oxidizes a substance to be oxidized, a cathode flow path that is provided in the second surface of the porous cathode and makes a gas containing the substance to be reduced flow so as to supply the porous cathode with the substance to be reduced, and an anode flow path that is provided to be in contact with the anode and makes an electrolysis solution flow so as to supply the anode with the electrolysis solution containing the substance to be oxidized; a first supply part supplying the cathode flow path with the gas containing the substance to be reduced; and a second supply part supplying the anode flow path with the electrolysis solution. In the electrolysis device of the embodiment, the cathode flow path has a first area that includes a gas flow path of a continuous structure which has a first gas inlet connected to the first supply part, and a first gas outlet, and a second area that includes a gas flow path of an interrupted structure which has a second gas inlet connected to the first gas outlet, and a second gas outlet.

Hereinafter, the electrolysis device of the embodiment will be described with reference to the drawings. In respective arrangements described below, practically the same constituent parts are denoted by the same reference numerals and description thereof may be partly omitted. The drawings are schematic and a relation between a thickness and a planar dimension, a thickness ratio among respective parts, and so on may be different from actual ones.

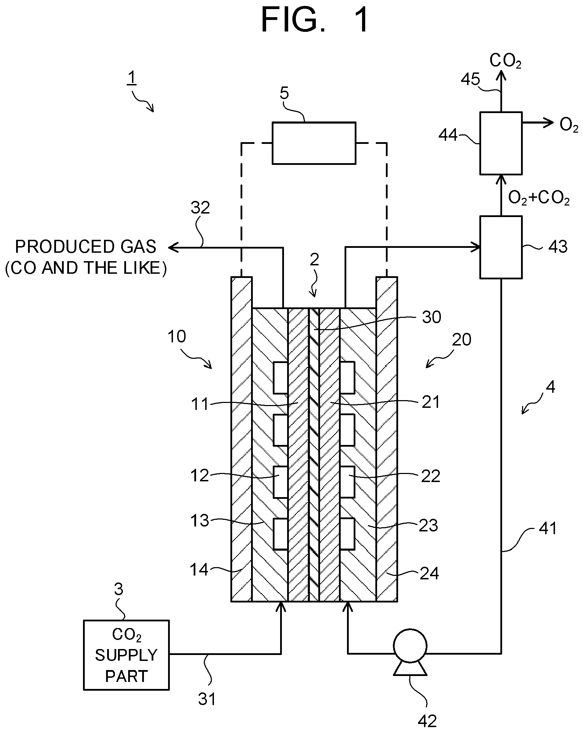

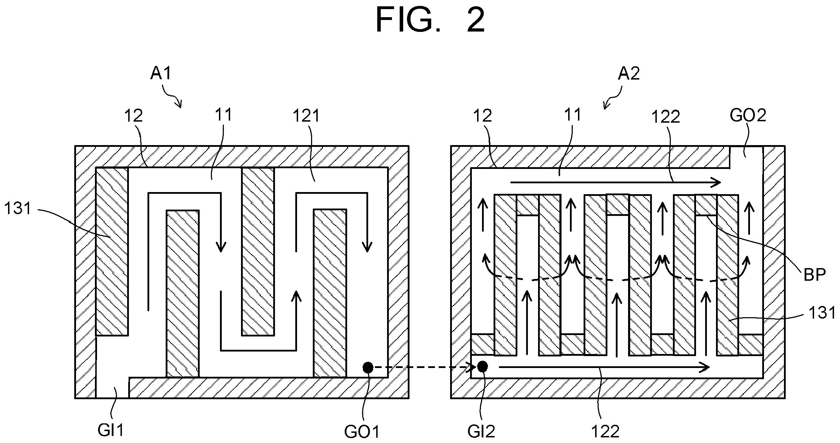

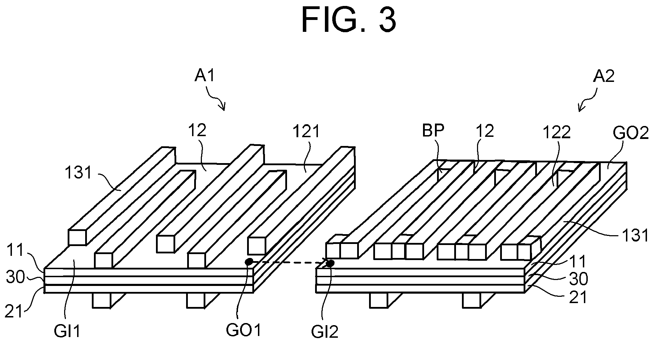

FIG. 1 is a cross-sectional view illustrating an electrolysis device 1 of the arrangement, FIG. 2 is a plan view illustrating a cathode flow path in an electrolysis cell of the electrolysis device illustrated in FIG. 1, and FIG. 3 is a perspective view illustrating the cathode flow path in the electrolysis cell of the electrolysis device illustrated in FIG. 1. Note that hereinafter a carbon dioxide electrolysis device will be mainly explained, but the electrolysis device of the arrangement is not limited thereto and may be an electrolysis device or the like electrolyzing nitrogen (N₂) to produce ammonia (NH₃), for example. The carbon dioxide (CO₂) electrolysis device 1 illustrated in FIG. 1, FIG. 2, and FIG. 3 has an electrolysis cell 2, a carbon dioxide (CO₂) supply part 3 being a first supply part supplying the electrolysis cell 2 with carbon dioxide (CO₂) as a substance to be reduced, and an electrolysis solution supply system 4 as an electrolysis solution supply part being a second supply part supplying the electrolysis cell 2 with an electrolysis solution containing a substance to be oxidized as an anode solution.

The electrolysis cell 2 includes a cathode part 10, an anode part 20, and a diaphragm 30. The cathode part 10 has a porous cathode 11, a cathode flow path 12, a cathode flow path plate 13, and a cathode current collector plate 14. The anode part 20 has an anode 21, an anode flow path 22, an anode flow path plate 23, and an anode current collector plate 24. The diaphragm 30 is disposed to separate the anode part 10 and the cathode part 20. The electrolysis cell 2 is sandwiched by an unillustrated pair of support plates and tightened by a bolt or the like. The porous cathode 11 and the anode 21 are connected to a power supply 5 supplying currents thereto. The power supply 5 is electrically connected to the porous cathode 11 and the anode 21 via a current introduction member or the like. The power supply 5 is not limited to an ordinary system power supply, a battery, or the like, but may be a power supply supplying electric power generated by renewable energy such as a solar battery, wind power generation, and geothermal power generation. The electrolysis cell 2 may have a state where a plurality of stacked cells is integrated. If the plural cells are integrally disposed, an amount of carbon dioxide reaction per unit lot area increases, thereby enabling an increase in throughput, and it is preferable that about 10 to 150 cells are stacked.

The CO₂ supply part 3 is connected to a gas inlet of the cathode flow path 12 via a pipe 31 and is configured to supply the cathode flow path 12 with a gas containing CO₂ (hereinafter, also simply referred to as a CO₂ gas). While CO₂ passes through the cathode flow path 12, CO₂ is converted to a carbon compound such as carbon monoxide (CO) by a reduction reaction. A gas (discharge gas) containing CO or the like produced by the reduction reaction in the cathode flow path 12 is discharged via a pipe 32 connected to a gas outlet of the cathode flow path 12. A valuable substance production part, for example, is connected to the pipe 32 connected to the gas outlet of the cathode flow path 12, though not illustrated. The valuable substance production part is a chemical synthesis part synthesizing a valuable substance using CO or the like discharged from the cathode flow path 12 as a material. The valuable substance production part is provided as necessary, and, instead thereof, a tank or the like storing a discharge gas containing CO or the like may be provided. The cathode flow path 12 will be described later in detail.

The electrolysis solution supply system 4 has a circulation route 41 circulating the electrolysis solution as an anode solution via the anode flow path 22 and a pump 42. A gas/liquid separation part 43 is connected to the circulation route 41. In the gas/liquid separation part 43, a liquid component containing the anode solution and a gas component containing a product are separated, and the liquid component circulates in the circulation route 41 that includes the anode flow path 22 by the pump 42. The gas component separated in the gas/liquid separation part 43 contains oxygen (O₂) being the product in the anode 21. Further, since CO₂ supplied to the cathode flow path 12 moves to an anode flow path 22 side, the gas component also contains CO₂. A gas component discharge part of the gas/liquid separation part 43 is connected to a CO₂ separation part 44. CO₂ separated in the CO₂ separation part 44 is returned to the CO₂ supply part 3, as necessary.

The porous cathode 11 is an electrode (reduction electrode) causing a reduction reaction of carbon dioxide (CO₂), to produce a carbon compound such as carbon monoxide (CO), methane (CH₄), ethane (C₂H₆), ethylene (C₂H₄), methanol (CH₃OH), ethanol (C₂H₅OH), and ethylene glycol (C₂H₆O₂). In the porous cathode 11, in parallel with the reduction reaction of carbon dioxide (CO₂), a side reaction may occur in which hydrogen (H₂) is generated by a reduction reaction of water (H₂O). The porous cathode 11 has a first surface in contact with the diaphragm 30 and a second surface facing the cathode flow path 12. The first surface of the porous cathode 11 is in contact with one of surfaces of the diaphragm 30.

The cathode flow path 12 being a flow path of a gas containing CO₂ (hereinafter, also referred to as a CO₂ gas) is constituted by a pit (groove portion/recessed portion) provided in the cathode flow path plate 13. For the cathode flow path plate 13, it is preferable to use a material low in chemical reactivity and high in conductivity. Examples of such a material include a metal material such as Ti and SUS, and a carbon material. The cathode flow path plate 13 is provided with an inlet port and a discharge port of gas, whose illustration is omitted. The CO₂ gas is introduced from the CO₂ supply part 3 via the gas inlet port or the gas discharge port. Further, a reaction product gas containing CO, H₂, or the like is discharged via the gas inlet port or the gas discharge port, and the discharged gas is sent to the unillustrated valuable substance production part or retrieved by a product recovery part. The cathode flow path plate 13 and the cathode flow path 12 provided therein are provided in a manner to be in contact with the second surface of the porous cathode 11, the second surface being on the opposite side of the first surface in contact with the diaphragm 30.

The porous cathode 11 has a structure enabling ions to move between the diaphragm 30 and the cathode flow path 12, that is, a porous structure such as a mesh material, a punching material, a porous body, and a metal fiber sintered compact, for example. A cathode catalyst material may have a nanoparticle, a nanostructure, a nanowire, or the like, in order to enhance the reduction reaction. The nanostructure is a structure obtained by forming nanoscale projections and depressions in a surface of a catalyst material. The porous cathode 11 has a porous gas diffusion layer and a porous cathode catalyst layer, for example. A porous layer denser than the gas diffusion layer may be disposed between the gas diffusion layer and the cathode catalyst layer. The gas diffusion layer is disposed on a cathode flow path 12 side and the cathode catalyst layer is disposed on a diaphragm 30 side. The cathode catalyst layer may get into the gas diffusion layer. As described above, the porous cathode 11 has the porous structure.

The cathode catalyst layer preferably has a catalyst nanoparticle, a catalyst nanostructure, or the like. The gas diffusion layer is constituted by carbon paper, carbon cloth, or the like, for example, and is subjected to water-repellent treatment. The cathode catalyst layer is supplied with the electrolysis solution or ions from the anode 21 via the diaphragm 30. The gas diffusion layer is supplied with the CO₂ gas from the cathode flow path 12, and a product of the reduction reaction of the CO₂ gas is discharged in the gas diffusion layer. The reduction reaction of CO₂ occurs in the neighborhood of a boundary between the gas diffusion layer and the cathode catalyst layer, and the gaseous product is discharged from the cathode flow path 12.

The cathode catalyst layer of the porous cathode 11 is preferably constituted by a catalyst material (cathode catalyst material) capable of reducing CO₂ to produce a carbon compound and capable of decreasing overvoltage of such a reaction. Examples of the cathode catalyst material include a metal such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), and tin (Sn), a metal material such as an alloy and an intermetallic compound containing at least one of those metals, a carbon material such as carbon (C), graphene, CNT (carbon nanotube), fullerene, and ketjen black, and a metal complex such as Ru complex and Re complex. To the cathode catalyst layer, it is possible to apply various shapes such as a plate shape, a mesh shape, a wire shape, a particle shape, a porous shape, a thin film shape, and an island shape.

The anode 21 is an electrode (oxidation electrode) causing an oxidation reaction of water (H₂O) in the anode solution as an electrolysis solution, to produce oxygen (O₂). The anode 21 has a first surface in contact with the diaphragm 30 and a second surface facing the anode flow path 22. The first surface of the anode 21 coheres to the diaphragm 30. The anode flow path 22 supplies the anode 21 with the anode solution, and is constituted by a pit (groove/recessed portion) provided in the anode flow path plate 23. The anode solution flows within the anode flow path 22 in a manner to be in contact with the anode 21. The anode flow path plate 23 is provided in a manner to be in contact with the second surface of the anode 21, the second surface being on the opposite side of the first surface in contact with the diaphragm 30.

For the anode flow path plate 23, it is preferable to use a material low in chemical reactivity and high in conductivity. Examples of such a material include a metal material such as Ti and SUS, and a carbon material. The anode flow path 22 is provided with a plurality of lands (projecting portions). The lands are provided for the sake of mechanical retention and electrical conduction. The lands are preferably provided alternately so as to uniformize a flow of the anode solution. Those lands make the anode flow path 22 meander. Further, it is preferable to provide the lands alternately in the anode flow path 22 also in order to discharge the anode solution smoothly in which an oxygen (O₂) gas is mixed.

The anode 21 is preferably constituted mainly by a catalyst material (anode catalyst material) capable of oxidizing water (H₂O) to produce oxygen and hydrogen ions and capable of decreasing overvoltage of such a reaction. Examples of the anode catalyst material include a metal such as platinum (Pt), palladium (Pd), and nickel (Ni), an alloy or an intermetallic compound containing such a metal, a binary metal oxide such as manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), lithium oxide (Li-O), and lanthanum oxide (La-O), a ternary metal oxide such as Ni-Co-O, Ni-Fe-O, La-Co-O, Ni-La-O, and Sr-Fe-O, a quaternary metal oxide such as Pb-Ru-Ir-O, and La-Sr-Co-O, and a metal complex such as Ru complex and Fe complex.

The anode 21 has a structure enabling the anode solution and ions to move between the diaphragm 30 and the anode flow path 22, that is, a porous structure such as a mesh material, a punching material, a porous body, and a metal fiber sintered compact, for example. An anode catalyst material may have a nanoparticle, a nanostructure, a nanowire, or the like, in order to enhance the oxidation reaction. The nanostructure is a structure obtained by forming nanoscale projections and depressions in a surface of a catalyst material.

The diaphragm 30 is constituted by an ion exchange membrane or the like enabling the ions and the electrolysis solution to move between the porous cathode 11 and the anode 21 and capable of separating the cathode part 10 and the anode part 20. Examples of the ion exchange membrane include NEOSEPTA (registered trademark) of ASTOM Corporation, SELEMION (registered trademark) of AGC Inc., Aciplex (registered trademark), Fumasep (registered trademark) and Fumapem (registered trademark) of FUMATECH GmbH, Nafion (registered trademark) of DuPont, which is a fluorocarbon resin obtained by sulfonating and polymerizing tetrafluoroethylene, Lewabrane (registered trademark) of LANXESS AG, IONSEP (registered trademark) of IONTECH Inc., Mustang (registered trademark) of Pall Corporation, RALEX (registered trademark) of MEGA Co., Ltd., and GORE-TEX (registered trademark) of W.L. Gore & Associates GmbH. However, other than the ion exchange membrane, it is possible to apply a glass filter, a porous polymer membrane, a porous insulating material, or the like to the diaphragm 30, as long as the material enables ions to move between the porous cathode 11 and the anode 21.

For the electrolysis solution as the anode solution, it is possible to use a solution using water (H₂O), that is, for example, an aqueous solution containing an arbitrary electrolyte. This solution is preferably an aqueous solution promoting an oxidation reaction of water. Examples of the aqueous solution containing the electrolyte include an aqueous solution containing phosphate ions (PO₄²⁻), borate ions (B0₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃⁻), hydroxide ions (OH⁻), or the like.

As the above-described electrolysis solution, it is possible to use, for example, an ionic liquid that is made of a salt of a cation such as imidazolium ion and pyridinium ion and an anion such as BF₄⁻ and PF₆⁻ and is in a liquid state in a wide temperature range, or an aqueous solution thereof. Other examples of electrolysis solution include an amine solution such as ethanolamine, imidazole, and pyridine, or an aqueous solution thereof. As the amine, a primary amine, a secondary amine, a tertiary amine, and so on can be cited. Those electrolysis solutions may be high in ion conductivity, have properties of absorbing carbon dioxide, and have characteristics of decreasing reduction energy.

Examples of the primary amine include methylamine, ethylamine, propylamine, butylamine, pentylamine, and hexylamine. A hydrocarbon of the amine may be replaced by alcohol, halogen, or the like. Examples of the amine whose hydrocarbon is replaced include methanolamine, ethanolamine, and chloromethylamine. Further, unsaturated bond may be present. Regarding those hydrocarbons, the same applies to the secondary amine and the tertiary amine.

Examples of the secondary amine include dimethylamine, diethylamine, dipropylamine, dibutylamine, dipentylamine, dihexylamine, dimethanolamine, diethanolamine, and dipropanolamine. The replaced hydrocarbons may be different. The same also applies to the tertiary amine. Examples of ones whose hydrocarbons are different include methylethylamine and methylpropylamine.

Examples of the tertiary amine include trimethylamine, triethylamine, tripropylamine, tributylamine, trihexylamine, trimethanolamine, triethanolamine, tripropanolamine, tributanolamine, trihexanolamine, methyldiethylamine, and methyldipropylamine.

Examples of the cations of the ionic liquid include 1-ethyl-3-methylimidazolium ions, 1-methyl-3-propylimidazolium ions, 1-butyl-3-methylimidazole ions, 1-methyl-3-pentylimidazolium ions, and 1-hexyl-3-methylimidazolium ions.

The second position of the imidazolium ion may be replaced. Examples of the cation resulting from the replacement of the second position of the imidazolium ion include a 1-ethyl-2,3-dimethylimidazolium ion, a 1,2-dimethyl-3-propylimidazolium ion, a 1-butyl-2,3-dimethylimidazolium ion, a 1,2-dimethyl-3-pentylimidazolium ion, and a 1-hexyl-2,3-dimethylimidazolium ion.

Examples of the pyridinium ions include methylpyridinium, ethylpyridinium, propylpyridinium, butylpyridinium, pentylpyridinium, and hexylpyridinium. In the imidazolium ion and the pyridinium ion, an alkyl group may be replaced, or an unsaturated bond may be present.

Examples of the anions include fluoride ions (F⁻), chloride ions (Cl⁻), bromide ions (Br), iodide ions (I⁻), BF₄⁻, PF₆⁻, CF₃COO⁻, CF₃SO₃⁻, NO₃⁻, SCN⁻, (CF₃SO₂)₃C⁻, bis(trifluoromethoxysulfonyl)imide, bis(trifluoroethoxysulfonyl)imide, and bis(perfluoroethylsulfonyl)imide. The ionic liquid may be composed of dipolar ions formed of the cations and the anions that are connected by hydrocarbons.

The carbon dioxide electrolysis device 1 of the arrangement operates as below. Description here is about the case where mainly carbon monoxide (CO) is produced through the reduction of CO₂ and oxygen is produced through the oxidation of H₂O. When a voltage equal to or higher than an electrolysis voltage is applied between the porous cathode 11 and the anode 21, an oxidation reaction of H₂O occurs near the anode 21 in contact with the electrolysis solution as the anode solution. As shown by the following equation (1), the oxidation reaction of H₂O contained in the electrolysis solution occurs, electrons are lost, and oxygen (O₂) and hydrogen ions (H⁺) are produced. A part of the produced hydrogen ions (H⁺) moves to a cathode flow path 12 side via the diaphragm 30.

2H₂O → 4H⁺ + O₂ + 4e⁻ ... (1)

When the hydrogen ions (H⁺) produced on the anode 21 side reach the vicinity of the porous cathode 11 and electrons (e⁻) are supplied to the cathode 21 from the power supply 5, a reduction reaction of CO₂ occurs. As shown by the following equation (2), the hydrogen ions (H⁺) having moved to the vicinity of the porous cathode 11 and the electrons (e⁻) supplied from the power supply 5 reduce CO₂ flowing in the cathode flow path 12 to produce carbon monoxide (CO).

2CO₂+ 4H⁺ + 4e⁻ → 2CO + 2H₂O ... (2)

As shown in the above equation (1), a gas component discharged from the anode flow path 22 on the anode 21 side contains an oxygen (O₂) gas as a product. Further, though CO₂ supplied to the porous cathode 11 side is subjected to the reduction reaction in the porous cathode 11, a part thereof flows into the anode 21 side as CO₂, or as carbonate ions (CO₃²⁻), hydrogen carbonate ions (HCO₃⁻), or the like. The carbonate ions (CO₃²⁻) or hydrogen carbonate ions (HCO₃⁻) having moved to the anode 21 side come to be present as CO₂ by a chemical equilibrium reaction and a part thereof is dissolved in the anode solution. The CO₂ gas that has not been able to be dissolved in the anode solution is contained together with O₂ gas in the gas discharged from the anode 21 side.

The cathode flow path 12 has a first area A1 that includes a first gas flow path 121 of a continuous structure and a second area A2 that includes a second gas flow path 122 of an interrupted structure, as illustrated in FIG. 2 and FIG. 3. The first gas flow path 121 in the first area A1 has a first gas inlet GI1 and a first gas outlet GO1. The second gas flow path 122 in the second area A2 has a second gas inlet GI2 and a second gas outlet GO2. In the first gas flow path 121, the first gas inlet GI1 is connected to the CO₂ supply part 3, though not illustrated in FIG. 2 or FIG. 3, and the first gas outlet GO1 is connected to the second gas inlet GI2 of the second gas flow path 122. The second gas outlet GO2 of the second gas flow path 122 is connected to the unillustrated valuable substance production part or product recovery part. As described above, the first area A1 of the cathode flow path 12 is located on an upstream side in relation to the flow of the CO₂ gas, while the second area A2 is located on a downstream side in relation to the flow of the CO₂ gas.

In the first area A1 located on the upstream side in relation to the flow of the CO₂ gas, a state is maintained where the CO₂ partial pressure in the gas flow flowing in the cathode flow path 12 is comparatively high. The first area A1 as above includes the first gas flow path 121 having the continuous structure formed by continuation of a meandering shape (serpentine shape), for example, as illustrated in FIG. 2 and FIG. 3. In other words, the CO₂ gas (including the product) flowing into the first gas flow path 121 flows continuously from the first gas inlet GI1 to the first gas outlet GO1 of the first gas flow path 121 having the continuous structure. The first gas flow path 121 having the continuous structure is constituted by a pit (groove portion/recessed portion) provided in the cathode flow path plate 13. More specifically, by forming lands 131 of the cathode flow path plate 13 on the cathode 13 in a manner that the flow path continues, the first gas flow path 121 having the meandering shape (serpentine shape) of the continuous structure, for example, is formed.

In the first gas flow path 121 having the continuous structure of the first area A1, similarly to a common electrolysis cell, the CO₂ gas permeates into the porous catalyst layer of the porous cathode 11 from the first gas flow path 121, so that a reduction reaction of CO₂ progresses. On this occasion, since the first area A1 is located on the upstream side of the CO₂ gas flow, the CO₂ partial pressure is comparatively high. Therefore, even in the first gas flow path 121 formed by simply disposing the lands 131 of the cathode flow path plate 13 on the porous cathode 11 in a manner to form the continuous structure flow path, the reduction reaction of CO₂ can be made to progress only by making the CO₂ gas permeate into the porous catalyst layer of the porous cathode 11 from the first gas flow path 121.

In contrast, since the second area A2 is located on the downstream side of the CO₂ gas flow, the CO₂ partial pressure is lowered as a result of progress of the CO₂ reduction reaction in the first area A1. Therefore, if a gas flow path similar to that of the first area A1 is applied to the second area A2, CO₂ reduction reactivity is deteriorated, resulting in deterioration of the reduction reaction rate of CO₂ introduced into the cathode flow path 12. Thus, to the second area A2 located on the downstream side of the CO₂ gas flow, the second gas flow path 122 of the interrupted structure is applied, as illustrated in FIG. 2 and FIG. 3.

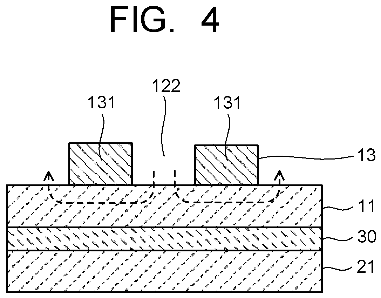

The second gas flow path 122 of the interrupted structure illustrated in FIG. 2 and FIG. 3 has blind alley parts BP that are locally provided, whereby the interrupted structure is formed. The blind alley parts BP are formed by disposing the lands 131 of the cathode flow path plate 13 in a blind alley shape, for example. The CO₂ gas flowing in the second gas flow path 122 is dammed up by the blind alley parts BP. However, a gas pressure flowing through the second gas flow path 122 is added to the CO₂ gas, and further, the porous cathode 11 is present below the second gas flow path 122. Therefore, as illustrated in FIG. 4, for example, the CO₂ gas dammed up by the blind alley parts BP of the second gas flow path 122 is forced to pass through the porous cathode 11 from the second gas flow path 122 by the gas pressure, and the reduction reaction of CO₂ progresses at that time. Thereby, it becomes possible to improve the reduction reaction rate of CO₂ introduced into the cathode flow path 12.

For example, in a case where the cathode flow path 12 is constituted only by the gas flow path of the continuous structure applied to the first area A1, when CO₂ of 2.6 sccm/cm² is introduced, CO₂ of 1.3 sccm/cm² moves into the anode flow path 22, and CO₂ of 0.13 sccm/cm², CO of 1.17 sccm/cm², and H₂ of 0.13 sccm/cm² are discharged from the cathode flow path 12. In other words, the reduction reaction rate of CO₂ is 90%. In contrast, in a case of applying the cathode flow path 12 constituted by the first area A1 that includes the first gas flow path 121 of the continuous structure and the second area A2 that includes the second gas flow path 122 of the interrupted structure in a manner that the entire flow path length becomes the same, when CO₂ of 2.6 sccm/cm² is introduced, CO₂ of 1.3 sccm/cm² is similarly discharged from the anode flow path 22, but CO of 1.3 sccm/cm² and H₂ of 0.13 sccm/cm² are discharged from the cathode flow path 12. ACO₂ amount in the gas discharged from the second gas flow path 122 is almost 0 sccm/cm², enabling the reduction reaction rate of CO₂ to be almost 100%. As described above, by applying the cathode flow path 12 constituted by the first area A1 that includes the first gas flow path 121 of the continuous structure and the second area A2 that includes the second gas flow path 122 of the interrupted structure, it becomes possible to improve the reduction reaction rate of CO₂ drastically. Achieving 100% reduction reaction rate of CO₂ makes it unnecessary to introduce a CO₂ separator between the pipe 32 and the valuable substance production part.

The first gas flow path 121 in the first area A1 and the second gas flow path 122 in the second area A2 may be directly connected, but a dehumidifier removing water may be disposed therebetween. Thereby, it is possible to supply a CO₂ gas whose moisture content has been decreased from the first gas flow path 121 of the first area A to the second gas flow path 122 of the second area A2. Thus, it is possible to heighten the reduction reactivity of CO₂ in the second gas flow path 122 of the second area A2. Usable as the dehumidifier disposed between the first gas flow path 121 and the second gas flow path 122 is a compressed air dehumidifier, a cooling dehumidifier, a suction dehumidifier, a heat regeneration dehumidifier, or the like, for example.

In a cell structure that includes the cathode flow path 12 having the first area A1 and the second area A2, configurations other than the gas flow path shape may be the same, or configurations corresponding to the respective areas may be applied. For example, dimensions of the first area A1 is preferably larger than dimensions of the second area A2. Since the first area A1 includes the first gas flow path 121 of the continuous structure, a flow amount of CO₂ and a reaction amount based thereon can be heightened. In contrast, the second area A2 is an area where the CO₂ gas dammed up by the blind alley parts BP in the second gas flow path 122 is forced to pass into the porous cathode 11 in order to increase the reduction reaction rate of CO₂ in the gas whose CO₂ partial pressure is low. Therefore, making the dimensions of the first area A1 larger than the dimensions of the second area A2 enables the higher reaction amount of the CO₂ gas. In other words, by making the dimensions of the first area A1 larger where the flow amount of CO₂ and the reaction amount based thereon are high, it is possible to suppress deterioration of the reaction amount of CO₂ gas as the entire electrolysis cell 2.

Regarding the porous cathode 11 of the first area A1 and the porous cathode 11 of the second area A2, a film thickness of the porous cathode 11 of the second area A2 is preferably larger than a film thickness of the porous cathode 11 of the first area A1. Thereby, it is possible to make the reduction reaction of CO₂ progress efficiently when the CO₂ gas dammed up by the blind lane parts BP of the second flow path 122 is forced to pass into the porous cathode 11. Further, a porosity of the porous cathode (including the porous cathode catalyst layer) 11 of the second area A2 is preferably higher than a porosity of the porous cathode (including the porous cathode catalyst layer) 11 of the first area A1. Also thereby, it is possible to make the reduction reaction of CO₂ having been forced to pass in the second gas flow path 122 progress efficiently. More specifically, the porosity of the porous cathode 11 of the second area A2 is preferably 40% or more and 95% or less, while the porosity of the porous cathode 11 of the first area A1 is preferably 30% or more and 80% or less.

Regarding the porous cathode catalyst layers of the porous cathodes 11 of the first area A1 and the second area A2, a catalyst content of the porous cathode catalyst layer of the second area A2 is preferably larger than a catalyst content of the porous cathode catalyst layer of the first area A1. Further, a current density applied to a cell portion having the second area A2 is preferably lower than a current density applied to a cell portion having the first area A1. Thereby, it is possible to make the reduction reaction of CO₂ in the first gas flow path 121 progress efficiently, and to make the reduction reaction of CO₂ remaining in the second gas flow path 122 progress efficiently.

The first area A1 that includes the first gas flow path 121 of the continuous structure and the second area A2 that includes the second gas flow path 122 of the interrupted structure can be disposed in parallel in one electrolysis cell 2. Alternatively, a stack cell is possible which is obtained by, for example, stacking an electrolysis cell 2 that has a first area A which includes a first gas flow path 121 of a continuous structure and an electrolysis cell 2 that has a second area A2 which includes a second gas flow path 122 of an interrupted structure. Those electrolysis cells may be disposed in parallel. As described above, it suffices that the first area A1 and the second area A2 are connected in this order, and the first area A1 and the second area A2 may be disposed in one electrolysis cell 2 or disposed in two electrolysis cells respectively to thereby make a stack structure or the like.

In the above-described arrangement, though the electrolysis device 1 of CO₂ is mainly described, the electrolysis device of the arrangement can be applied to electrolysis and reduction of N₂. In an electrolysis device of N₂, gaseous N₂ is made to flow in a cathode flow path in a manner to be in contact with a cathode (reduction electrode), and an electrolysis solution containing water or vapor is made to flow in an anode flow path in a manner to be in contact with an anode (oxidation electrode). In the cathode, nitrogen (N₂) is reduced to produce ammonia (NH₃). Such an electrolysis device of N₂ prevents production of a mixed gas of N₂ and NH₃ at the time of reduction of N₂ gas, making it possible to manufacture NH₃ of high concentration. For a material of a catalyst of each electrode, a catalyst material or the like appropriate to electrolysis and reduction of N₂ is used.

It should be noted that the configurations of the above-described arrangements may be employed in combination, and they may be partly replaced. While certain arrangements of the present invention have been described here, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

### (Numbered Clauses relating to the arrangements)

1. An electrolysis device comprising:
   an electrolysis cell including a diaphragm, a porous cathode that has a first surface in contact with one surface of the diaphragm and a second surface on the opposite side of the first surface and to reduce a substance to be reduced, an anode that is disposed to be in contact with the other surface of the diaphragm and to oxidize a substance to be oxidized, a cathode flow path that is provided in the second surface of the porous cathode and makes a gas containing the substance to be reduced flow so as to supply the porous cathode with the substance to be reduced, and an anode flow path that is provided to be in contact with the anode and makes an electrolysis solution flow so as to supply the anode with the electrolysis solution containing the substance to be oxidized;
   a first supply part supplying the cathode flow path with the gas containing the substance to be reduced; and
   a second supply part supplying the anode flow path with the electrolysis solution, wherein
   the cathode flow path has a first area that includes a gas flow path of a continuous structure which has a first gas inlet connected to the first supply part, and a first gas outlet, and a second area that includes a gas flow path of an interrupted structure which has a second gas inlet connected to the first gas outlet, and a second gas outlet.
2. The device according to clause 1, wherein
   dimensions of the first area are larger than dimensions of the second area.
3. The device according to clause 1 or clause 2, wherein
   a film thickness of the porous cathode of the second area is larger than a film thickness of the porous cathode of the first area.
4. The device according to any one of clause 1 to clause 4, wherein
   a porosity of the porous cathode of the second area is higher than a porosity of the porous cathode of the first area.
5. The device according to any one of clause 1 to clause 4, wherein
   a catalyst content of the porous cathode of the second area is larger than a catalyst content of the porous cathode of the first area.
6. The device according to any one of clause 1 to clause 5, wherein
   a current density applied to the second area is lower than a current density applied to the first area.
7. The device according to any one of clause 1 to clause 6, further comprising
   a dehumidifier disposed between the first gas outlet of the first area and the second gas inlet of the second area.
8. The device according to any one of clause 1 to clause 7, wherein
   the first area and the second area are disposed in the one electrolysis cell.
9. The device according to any one of clause 1 to clause 7, wherein
   the first area and the second area are disposed in the different electrolysis cells.
10. The device according to clause 9, wherein
   the electrolysis cell in which the first area is disposed and the electrolysis cell in which the second area is disposed are stacked.
11. The device according to clause 1, wherein
   the electrolysis device is a carbon dioxide electrolysis device.

## Claims

1. An electrolysis device comprising:
an electrolysis cell including a diaphragm, a porous cathode that has a first surface in contact with one surface of the diaphragm and a second surface on the opposite side of the first surface and to reduce a substance to be reduced, an anode that is disposed to be in contact with the other surface of the diaphragm and to oxidize a substance to be oxidized, a cathode flow path that is provided in the second surface of the porous cathode and makes a gas containing the substance to be reduced flow so as to supply the porous cathode with the substance to be reduced, and an anode flow path that is provided to be in contact with the anode and makes an electrolysis solution flow so as to supply the anode with the electrolysis solution containing the substance to be oxidized;
a first supply part supplying the cathode flow path with the gas containing the substance to be reduced; and
a second supply part supplying the anode flow path with the electrolysis solution, wherein
the cathode flow path has a first area that includes a gas flow path of a continuous structure which has a first gas inlet connected to the first supply part, and a first gas outlet, and a second area that includes a gas flow path of an interrupted structure which has a second gas inlet connected to the first gas outlet, and a second gas outlet.

2. The device according to claim 1, wherein
dimensions of the first area are larger than dimensions of the second area.

3. The device according to claim 1 or claim 2, wherein
a film thickness of the porous cathode of the second area is larger than a film thickness of the porous cathode of the first area.

4. The device according to any one of claim 1 to claim 4, wherein
a porosity of the porous cathode of the second area is higher than a porosity of the porous cathode of the first area.

5. The device according to any one of claim 1 to claim 4, wherein
a catalyst content of the porous cathode of the second area is larger than a catalyst content of the porous cathode of the first area.

6. The device according to any one of claim 1 to claim 5, wherein
a current density applied to the second area is lower than a current density applied to the first area.

7. The device according to any one of claim 1 to claim 6, further comprising
a dehumidifier disposed between the first gas outlet of the first area and the second gas inlet of the second area.

8. The device according to any one of claim 1 to claim 7, wherein
the first area and the second area are disposed in the one electrolysis cell.

9. The device according to any one of claim 1 to claim 7, wherein
the first area and the second area are disposed in the different electrolysis cells.

10. The device according to claim 9, wherein
the electrolysis cell in which the first area is disposed and the electrolysis cell in which the second area is disposed are stacked.

11. The device according to claim 1, wherein
the electrolysis device is a carbon dioxide electrolysis device.
